Europäisches Patentamt

European Patent Office

Office européen des brevets

(19)

(11) Veröffentlichungsnummer : **0 060 378**
**B1**

(12)

# EUROPÄISCHE PATENTSCHRIFT

(45) Veröffentlichungstag der Patentschrift :
26.06.85

(51) Int. Cl.⁴ : **G 01 N 37/00, G 01 N 27/90**

(21) Anmeldenummer : **82100213.6**

(22) Anmeldetag : **14.01.82**

---

(54) **Verfahren und Anordnung zum Ausgeben von Fehlerortsinformationen.**

---

(30) Priorität : **12.03.81 DE 3109437**

(43) Veröffentlichungstag der Anmeldung :
**22.09.82 Patentblatt 82/38**

(45) Bekanntmachung des Hinweises auf die Patenterteilung : **26.06.85 Patentblatt 85/26**

(84) Benannte Vertragsstaaten :
**FR GB IT SE**

(56) Entgegenhaltungen :
**DE-A- 2 411 211**
**DE-A- 2 451 199**
**DE-B- 1 773 531**
**FR-A- 2 330 501**
**GB-A- 2 014 317**
**US-A- 3 617 875**

(73) Patentinhaber : **Institut Dr. Friedrich Förster Prüfgerätebau GmbH & Co. KG**
**Postfach 925 in Laisen 70**
**D-7410 Reutlingen 1 (DE)**

(72) Erfinder : **Geweke, Werner**
**Schillerstrasse 8**
**D-7410 Reutlingen 1 (DE)**
Erfinder : **Griese, Alfons**
**Justinus-Kerner-Strasse 77**
**D-7410 Reutlingen 1 (DE)**

## Beschreibung

Die Erfindung betrifft ein Verfahren der im Oberbegriff des Anspruchs 1 genannten Art sowie eine Anordnung gemäß dem Oberbegriff des Anspruchs 7.

Ein Verfahren der oben bezeichneten Art wird in DE-A-2 411 211 beschrieben und dient dort dazu, Fehlerstellen auf der Oberfläche eines Rohres zu markieren, die u. a. von einem das Rohr umlaufenden und dabei dessen Oberfläche mit Prüfsonden abtastenden Prüfkopf ermittelt werden. Zur Markierung der Fehlerstellen wird ein Satz von auf dem Umfang des Rohres verteilten Markiereinrichtungen benutzt, deren jede für den unter ihr liegenden Sektor der Rohroberfläche zuständig ist. Mit Hilfe einer Schaltlogik werden vom Prüfkopf ermittelte Fehlersignale der zuständigen Markiereinrichtung zugeordnet, die eine Markierung vornimmt, sobald der Fehler aufgrund der Längsbewegung des Prüfteiles die Markiereinrichtungen erreicht hat. Zur Erzielung der Markierverzögerung zwischen Prüfen und Markieren werden in bekannter Weise Schieberegister als Registerspeicher eingesetzt.

Das beschriebene Verfahren ist in der Vergangenheit vielfach eingesetzt worden, hat jedoch neben anerkannten Vorteilen auch schwerwiegende Nachteile. Um die Sektoren nicht zu groß werden zu lassen, muß eine genügende Anzahl von Markiereinrichtungen vorgesehen werden. Das bedeutet einen nicht unbeträchtlichen Aufwand. Weiteren hohen Aufwand bringt die Notwendigkeit zur Anordnung der Markiereinrichtungen rund um den Umfang des Prüfgutes mit sich : Da der Abstand der Markierdüsen von der Prüfteiloberfläche im Interesse einer scharfen Markierung nicht zu groß sein darf, muß für unterschiedliche Prüfteildurchmesser eine Verstellung aller Markiereinrichtungen in radialer Richtung vorgesehen werden. Das heißt aber, bei beispielsweise vier Sektoren müssen vier Markiereinrichtungen in vier verschiedenen Richtungen verstellt werden können. Wirtschaftliche und technische Gesichtspunkte setzen für die Anzahl der Sektoren enge Grenzen. Dadurch wird auch die erreichbare Genauigkeit der transversalen Fehlerortsangabe in unerwünschtem Maß begrenzt.

Der Erfindung liegt demgegenüber die Aufgabe zugrunde, ein Verfahren der eingangs beschriebenen Art sowie eine Vorrichtung zum Durchführen dieses Verfahrens zu finden, bei denen der notwendige Aufwand reduziert ist und gleichzeitig eine höhere Genauigkeit der transversalen Fehlerortsmarkierung erreicht werden kann.

Diese Aufgabe wird gelöst durch ein Verfahren, das gemäß Patentanspruch 1 und durch eine Anordnung, die gemäß Patentanspruch 7 gekennzeichnet ist.

Ein wichtiger Vorteil der erfindungsgemäßen Lösung besteht darin, daß die Zahl der notwendigen Markiereinrichtungen radikal herabgesetzt werden kann ; es sind grundsätzlich nur noch zwei Markiereinrichtungen erforderlich, die eine für die longitudinale Fehlerortsmarkierung, die zweite für die in Längsrichtung codierte transversale Fehlerortsmarkierung. Die letztere kann u. U. sogar von einer ohnehin zusätzlich vorhandenen Markiereinrichtung mit vollzogen werden, z. B. von einer Sondermarkiereinrichtung zur Markierung von Nachtfehlern bei der Prüfung geschweißter Rohre. Eine Erhöhung der möglichen Genauigkeit gegenüber dem bekannten Stand der Technik ergibt sich bei der erfindungsgemäßen Lösung daraus, daß die Grenzen der Genauigkeit nicht mehr von der Anzahl der verwendeten Markiereinrichtung abhängen. Bereits mit insgesamt zwei Markiereinrichtungen kann eine optimale Auflösung der transversalen Fehlerortsmarkierung erzielt werden, die der Auflösung der longitudinalen Fehlerortsmarkierung praktisch gleich kommt. Die Grenzen der erreichbaren Auflösung werden jetzt im wesentlichen nur noch von dem Eigenschaften der verfügbaren Markiereinrichtungen bestimmt. Für rundum abzutastende Prüfgut wie Rohre und dgl. liegt ein entscheidender Vorteil der erfindungsgemäßen Lösung darin begründet, daß die erforderlichen Markiereinrichtungen nicht mehr über den gesamten Umfang des Prüfgutes verteilt sein müssen, sondern im wesentlichen an einer Stelle des Umfanges angebracht sein können. Eine Verstellung dieser Markiereinrichtungen läßt sich einfach und schnell durchführen und kann beispielsweise mit der Einstellmechanik des Rollgangantriebes gekoppelt sein. Für Rohre und dgl. ergibt sich noch ein weiterer Vorteil. Beim Inspizieren der geprüften Rohre kann man alle Fehlerortsmarkierungen auf eng benachbarten Mantellinien finden. Sie müssen also nicht erst lange gesucht werden.

Es liegt auf der Hand, daß die Erfindung besonders vorteilhaft ist bei einem Prüfgerät mit rotierendem Prüfkopf, z. B. dem in DE-A-2 411 211 dargestellten. Die unten folgende Beschreibung wird sich deshalb auf Beispiele dieser Art beschränken. Dennoch ist ein Einsatz der Erfindung auch für andere Anwendungsfälle lohnend. So kann beispielsweise bei der Knüppelprüfung, wenn eine Knüppelseite in zehn Kanälen geprüft wird, die Markierung mit nur zwei statt bisher zehn Markiereinrichtungen durchgeführt werden.

Die erste Markierung und die Zusatzmarkierung können im allgemeinen bereits durch seitlich ein wenig versetzte Anordnung der Markiereinrichtungen leicht unterschieden werden. Die Übersichtlichkeit kann jedoch erheblich erhöht werden, wenn unterschiedliche Markiermittel, z. B. verschiedene Farben, benützt werden.

Während die erste Markierung bekanntlich eine absolute Angabe über die Lage des Fehlers macht, indem sie den Fehlerort in Längsrichtung des Prüfteiles bezeichnet, ist die der Zusatzmarkierung zu entnehmende Angabe eine relative. Die Referenzlinie, auf die sich die Angabe bezieht, kann sowohl durch die erste Markierung als auch durch die Zusatzmarkierung selbst am Prüfteil definiert werden. Bei zylindrischen Prüfteilen bietet sich vielfach mit Vorteil die Scheitellinie als Referenzlinie an. Die der Zusatzmarkierung zu entnehmende relative Angabe besteht in einer Strecke entlang der Längsrichtung des Prüfteiles, die im allgemeinen von den Anfangspunkten der Zusatzmarkierung und der ersten Markierung begrenzt wird. Man unterscheidet zwischen direkter oder indirekter Codierung, je nachdem ob die genannte Strecke direkt dem Abstand zwischen Fehlerort und Referenzlinie entspricht oder ob dieser Abstand sich in einfacher Weise aus der Strecke ergibt. Die direkte Codierung ist zweifellos für den Anwender die elegantere, bedingt aber einen gewissen Mehraufwand. Eine sehr einfache Möglichkeit zur Realisierung der indirekten Codierung besteht darin, daß man in regelmäßigen Abständen, die der Länge einer Abtastperiode entsprechen, Zusatzmarkierungen am Prüfteil anbringt. Aus der Lage der von einem Fehler hervorgerufenen ersten Markierung zwischen zwei Zusatzmarkierungen kann die transversale Fehlerlage bestimmt werden.

Im folgenden soll die Erfindung anhand von Beispielen und Figuren näher erläutert werden. Es zeigen im einzelnen

Figur 1 in schematisierter Darstellung eine Prüf- und Markieranordnung mit indirekter Codierung

Figur 2 einen Schnitt durch die Markiereinrichtungen nach Figur 1

Figur 3 das Blockschaltbild einer Markieranordnung mit indirekt Codierung

Figur 4 die Belegung der Schieberegister aus Figur 3

Figur 5 das gegenüber Figur 3 erweiterte. Blockschaltbild einer Markieranordnung

Figur 6 in schematisierter Darstellung eine Prüf- und Markieranordnung mit direkter Codierung

Figur 7 das Blockschaltbild einer Markieranordnung mit direkter Codierung

Figur 8 das gegenüber Figur 7 erweiterte Blockschaltbild einer Markieranordnung.

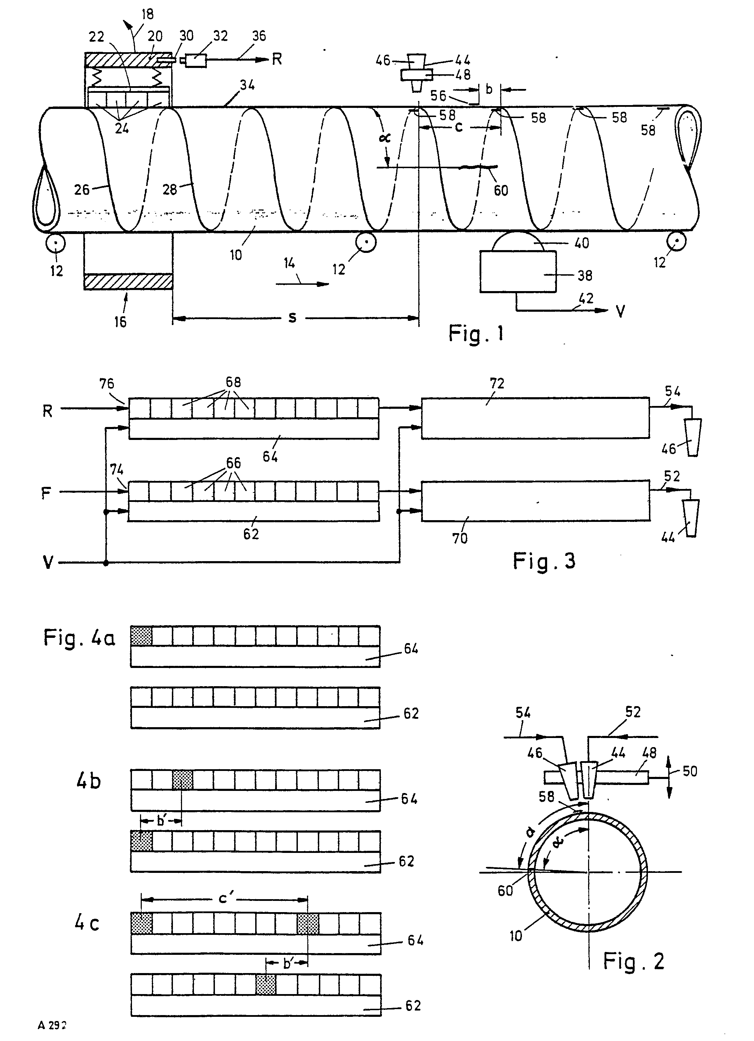

Die Figuren 1-4 illustrieren ein einfaches Ausführungsbeispiel einer erfindungsgemäßen Anordnung bei der die transversale Markierung mit indirekter Codierung ausgeführt wird. Das Prüfteil, ein Metallrohr 10, wird von einem Rollgang 12 in Richtung vom Pfeil 14 voranbewegt und durchläuft dabei den in Richtung vom Pfeil 18 umlaufenden Rotierkopf 16 eines nicht näher dargestellten Fehlerprüfgerätes. Bei dem letzteren kann es sich um ein beliebiges zum Feststellen von Fehlern geeignetes zerstörungsfreies Werkstoffprüfgerät händeln, etwa um ein magnetisches Streuflußprüfgerät, wie es dem Fachmann in allen Einzelheiten aus der Literatur bekannt ist. An einem Rahmen 20 des Rotierkopfes 16 ist federnd ein Sondenträger 22 befestigt, der die Oberfläche des Rohres 10 mit einer Anzahl von auf Fehler im Prüfteil reagierenden Prüfsonden 24 abtastet. Dies kann, je nach Ausführung des Prüfgerätes, schleifend oder berührungsfrei geschehen. Die Vorschubgeschwindigkeit der nicht dargestellten Antriebseinrichtung des Rohres 10 wird so gewählt, daß die von den Linien 26, 28 begrenzte Abtastbahn eine Leichte Überlappung erfährt, die in Figur 1 der Einfachheit halber nicht berücksichtigt ist. Ein Referenzsignalgeber, z. B. ein kleiner Permanentmagnet 30, ist in den Rahmen 20 eingebaut. Der Umlaufbahn des Magneten 30 gegenüber ist eine Induktionsspule 32 am nicht dargestellten Gehäuse des Rotierkopfes 16 angebracht. Bei jedem Umlauf des Rahmens 20, und zwar gleichzeitig mit dem Vorbeilauf der Prüfsonden 24 an der Scheitellinie 34 des Rohres 10, wird in der Induktionsspule 32 ein Referenzsignal R induziert und von Leitung 36 weitergeleitet. Der Vorschubbahn des Rohres 10 gegenüber ist ein Vorschubsignalgeber 38 angeordnet, der, z. B. über ein Reibrad 40, im Kontakt mit der Oberfläche des Rohres 10 steht und ein von der Leitung 42 weiterzugebendes Vorschubtaktsignal V herstellt. Das Signal V besteht in einer Folge von Impulsen, deren Folgefrequenz von der Vorschubgeschwindigkeit des Rohres 10 abhängt. Vorschubsignalgeber, die ein derartiges Signal abgeben, sind allgemein bekannt und können auch in von der Beschreibung abweichender Ausführungsart eingesetzt werden.

An einer in Richtung von Pfeil 14 um die Strecke s vor dem Rotierkopf 16 an der Vorschubbahn gelegenen Stelle, vorzugsweise der Scheitellinie 34 des Rohres 10 gegenüberliegend, ist eine erste Markiereinrichtung 44, unmittelbar neben ihr eine zweite Markiereinrichtung 46 angebracht. Die beiden Markiereinrichtungen 44, 46 sind in eine Halterung 48 eingebaut, die in Richtung der Pfeile 50 verstellt werden kann, wenn eine Änderung des Rohrdurchmessers dies erforderlich macht (Figur 2). Elektrische Signale aus den Leitungen 52 und 54 betätigen die Markiereinrichtungen 44, 46 in der Weise, daß auf der Rohroberfläche scharf begrenzte Markierungen hergestellt werden, und zwar von Markiereinrichtung 44 die Markierungen 56, von Markiereinrichtung 46 die Markierungen 58. Der besseren Unterscheidbarkeit wegen können dazu von den beiden Markiereinrichtungen 44, 46 unterschiedliche Farben benutzt werden. Ein Fehler 60, dessen longitudinale und transversale Lage durch die Markierungen 56, 58 angegeben werden soll, befindet sich um den Winkel $\alpha$ gegenüber der Referenzlinie 34 versetzt im Rohr 10. Sein Abstand von der Referenzlinie beträgt a.

Das Blockschaltbild nach Figur 3 erläutert die Erzeugung der zum Betätigen der Markiereinrichtungen 44, 46 benötigten Signale. Zwei Schieberegister 62, 64 weisen die gleiche Anzahl von Speicherplätzen 66, 68 auf. An ihre Ausgänge sind zwei weitere Schieberegister 70, 72 ebenfalls gleicher Kapazität angeschlossen, deren Ausgänge mit den Markiereinrichtungen 44 bzw. 46 verbunden sind. Alle Schieberegister arbeiten im Serienbetrieb und allen ist das Vorschubtaktsignal V gemeinsam. Am Informationseingang 74 des Schieberegisters 62 liegt das von den Sonden 24 beim Überlaufen des Fehlers 60 erzeugte Fehlersignal F, während an den Informationseingang 76 des Schieberegisters 64 das aus Induktionsspule 32 stammende Referenzsignal R gelangt.

Die Anordnung arbeitet, wie in Figur 4 erläutert, folgendermaßen. Beim Überlaufen der Referenzlinie wird von Referenzsignal R der erste Speicherplatz des Schieberegisters 64 gesetzt. Jeder Takt des Signals V schiebt die Informationen der Schieberegister um einen Platz voran.

Nach b' Takten überlaufen die Sonden 24 den Fehler 60 und lassen ein Fehlersignal F entstehen, das den ersten Speicherplatz von Schieberegister 62 setzt (Figur 4b). Nach Vollendung eines Umlaufs der Sonden 24 setzt wiederum ein Impuls des Referenzsignals R den ersten Speicherplatz des Schieberegisters 64 (Figur 4c). Zwischen den beiden gesetzten Speicherplätzen des Schieberegisters 64 besteht ein Abstand von c' Takten, was der Zeit zwischen zwei aufeinanderfolgenden Überschreitungen der Referenzlinie 34 durch die Sonden 24, d. h. der Zeit eines Rotierkopfumlaufs, entspricht. Demgegenüber besteht zwischen dem vorderen gesetzten Speicherplatz des Schieberegisters 64 und dem gesetzten Speicherplatz des Schieberegisters 62 ein Abstand von b' Takten, was der Zeit zwischen der ersten Überschreitung der Referenzlinie 34 und dem Überlaufen des Fehlers 60 entspricht. Nach Durchlaufen der Schieberegister 62, 64 werden die Informationen von den Schieberegistern 70, 72 übernommen, die eine im wesentlichen der Strecke s zwischen Rotierkopf 16 und Markiereinrichtungen 44, 46 entsprechende Kapazität aufweisen und nach Fortschreiten des Rohres 10 um diese Strecke s Markierinformationen an die Markiereinrichtungen 44, 46 ausgeben. Die Markiereinrichtung 46 führt Markierung 58 mit dem gegenseitigen Abstand c aus, um den das Rohr 10 innerhalb eines Rotierkopfumlaufs vorangekommen ist, wogegen die Markierung 56 der Markiereinrichtung 44 von der ihr vorausgehenden Markierung 58 den Abstand b aufweist, um den das Rohr vorangekommen ist, während die Sonden 24 von der Referenzlinie 34 zum Fehlerort 60 gelangt sind. Das Verhältnis der Strecken b und c entspricht dem Verhältnis der Taktabstände b' und c' und gibt an, welchen Anteil des Vollkreises der Winkel α zwischen der Referenzlinie 34 und dem Fehlerort 60 ausmacht:

$$\frac{b}{c} = \frac{b'}{c'} \quad (1)$$

$$\alpha = 2\,\pi \cdot \frac{b}{c} \quad (2)$$

Für einen festen Rohrdurchmesser ist die Strecke b direkt proportional zur Strecke a, dem Abstand zwischen der Referenzlinie und dem Fehlerort auf der Rohroberfläche. Mit a oder α ist der Fehlerort in transversaler Richtung exakt bestimmt.

Die Kapazität der Schieberegister 62, 64 muß, wie sich aus dem zuvor Gesagten ergibt, mindestens c' Speicherplätze betragen bzw. mindestens den Abstand c zwischen zwei benachbarten Überlaufstellen der Referenzlinie überbrücken. Während des Fortschreitens des Rohres 10 von Rotierkopf 16 zu den Markiereinrichtungen darf keine Drehung des Rohres in Umfangsrichtung erfolgen. Auch dürfen sich die Geschwindigkeiten von Rohrvorschub und Rotierkopfumlauf innerhalb einer Umlaufperiode nicht ändern.

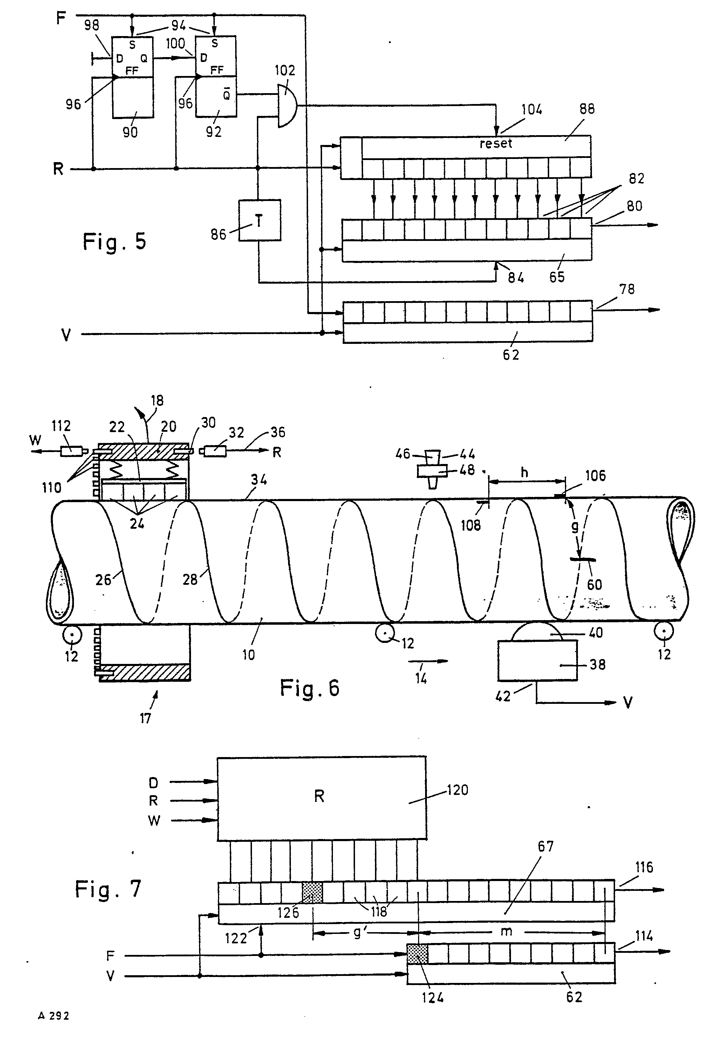

Von den Zusatzmarkierungen 58 ist an sich nur die vor bzw. hinter einer Markierung 56 gelegene notwendig für die Ermittlung der Strecken b und c. Sind die überflüssigen Zusatzmarkierungen unerwünscht, so läßt sich durch eine einfache Schaltung nach Figur 5 erreichen, daß tatsächlich nur die notwendigen Markierungen ausgeführt werden. Wie in der Schaltung nach Figur 3 sind zwei Schieberegister 62, 65 vorgesehen, deren Ausgänge 78, 80 über die Markierschieberegister 70, 72 mit den Markiereinrichtungen 44, 46 verbunden sind. Während am Informationseingang von Schieberegister 62 das Fehlersignal F zur Serien-Eingabe ansteht, ist das Schieberegister 65 zur Parallel-Eingabe der Information ausgelegt. Zudem muß Schieberegister 65 ein akkumulatives Schieberegister sein, d. h. eine « I » am Paralleleingang 82 muß auf jeden Fall ins Register übernommen werden, während eine « O » am Paralleleingang eine schon im Register gespeicherte « I » nicht löschen darf. Eine Übernahme der Information des Paralleleinganges 82 erfolgt durch einen Impuls am Übernahmeeingang 84. Der Letztere ist über ein Verzögerungsglied 86 mit dem Referenzsignal R verbunden. Die Schaltung enthält ein weiteres Schieberegister 88 der gleichen Kapazität wie die zuvor genannten, dessen Speicherplätze, mit Ausnahme des ersten, an den Paralleleingang 82 angeschlossen sind und an dessen Informationseingang das Referenzsignal R liegt. Die Takteingänge aller Schieberegister 62, 65, 88 erhalten gemeinsam das Vorschubtaktsignal V. Zum Zurücksetzen des Schieberegisters 88 sind zwei Flip-Flop-Stufen 90, 92 vorgesehen, deren Setzeingänge 94 mit dem Fehlersignal F und deren dynamische Eingänge 96 mit dem Referenzsignal R verbunden sind. Die im vorliegenden Fall eingesetzten Flip-Flop-Stufen 90, 92 arbeiten so, daß die Rückflanke eines an den dynamischen Eingang 96 der Stufe gelangten Impulses diese je nach dem Potential am D-Eingang 98, 100 setzt oder rücksetzt. Der D-Eingang der Flip-Flop-Stufe 90 liegt dauernd auf Potential « O », der D-Eingang 100 der Flip-Flop-Stufe 92 liegt am Ausgang Q der Flip-Flop-Stufe 90. Der invertierte Ausgang Q̄ der Flip-Flop-Stufe 92 und das Referenzsignal R sind an die Eingänge eines Und-Gatters 102 angeschlossen, dessen Ausgang zum Rücksetzeingang 104 des Schieberegisters 88 führt.

Bei der beschriebenen Schaltung können die beiden Fälle « Fehler während eines Umlaufs »

und « kein Fehler während eines Umlaufs » unterschieden werden. Ist kein Fehler während der beiden letzten Rotierkopfumläufe festgestellt worden, so sind die beiden Stufen 90, 92 nicht gesetzt. Das Referenzsignal R erzeugt über das Und-Gatter 102 einen Rücksetzimpuls am Eingang 104 des Schieberegisters 88 und löscht damit alle eventuell im letzteren gesetzten Speicherplätze mit Ausnahme des ersten. Unabhängig davon, ob ein Fehler vorlag oder nicht wird der erste Speicherplatz vom Signal R gesetzt und das gespeicherte Signal im Takt der Signale V weitergeschoben.

Hat ein Fehler vorgelegen, so sind die Stufen 90, 92 durch Signal F gesetzt worden. Ein jetzt auftretendes Signal R kann keine Löschung des Schieberegisters 88 bewirken, da am Ausgang $\overline{Q}$ der Stufe 92 « O »-Potential liegt. Die vom vorausgegangenen Signal R herrührende Information im Schieberegister 88 bleibt erhalten und wird auf Veranlassung des durch das Zeitglied 86 verzögerten Signals R vom Schieberegister 65 übernommen. Die Rückflanke des selben Signals R setzt Stufe 90 zurück. Das nächstfolgende Signal R kann noch keinen Rücksetzimpuls am Eingang 104 bewirken, da Stufe 92 noch gesetzt ist. Wieder veranlaßt das verzögerte Signal R an Eingang 84 die Übernahme der Information des Schieberegisters 88 durch Schieberegister 65. Erst die Rückflanke dieses Signals R bewirkt das Rücksetzen der Stufe 92 und ermöglicht so eine Löschung des Schieberegisters 88 durch das nachfolgende Signal R an Eingang 104, falls nicht in der Zwischenzeit ein neues Fehlersignal F erscheint. Das zuvor in das Schieberegister 62 eingespeicherte Fehlersignal F wird somit von dem ihm vorausgehenden und dem ihm nachfolgenden Referenzsignal im Schieberegister 65 begleitet, weitere Referenzsignale gelangen nicht in das Schieberegister 65. Zusatzmarkierungen 58 werden demgemäß von Markiereinrichtung 46 nur dann ausgeführt, wenn zwischen zwei Markierungen 58 wenigstens eine Markierung 56 liegt.

Eine Möglichkeit zum Herstellen von direkt codierten transversalen Markierungen ist in den Figuren 6 und 7 schematisch dargestellt. Für in den vorhergehenden Figuren schon enthaltene gleiche Teile werden die gleichen Bezugsziffern verwendet. Der Einfachheit halber beschränkt sich die Beschreibung darauf, Abweichungen gegenüber dem bereits Dargestellten aufzuzeigen.

Im vorliegenden Fall geht es darum, die Kreisbogenstrecke g zwischen Referenzlinie 34 und Fehlerort 60 durch die Strecke h zwischen den Markierungen 106 und 108 anzugeben. Die Strecke h soll, unabhängig vom Durchmesser des Rohres 10, proportional oder vorzugsweise gleich der Strecke g sein. Dazu benötigt man zusätzlich eine Information über die Winkellage, in der sich die Sonden 24 gegenüber der Referenzlinie 34 befinden. Als Winkelsignalgeber sind am Umfang des Rotierkopfes 17 in gleichmäßigen Abständen eine Reihe von Magneten 110 eingebaut. Ihrer Umlaufbahn gegenüber ist oberhalb der Scheitellinie des Rohres 10 eine Impulsspule 112 angebracht, in der in gleicher Weise wie in Spule 32 beim Vorbeilauf der Magnete 110 Impulse induziert werden, die als Winkeltaktsignal benutzt werden. Die Markiereinrichtungen 44, 46 sind wie in Figur 2 dargestellt angeordnet.

Gemäß Figur 7 sind wiederum zwei Schieberegister 62, 67 vorgesehen. Schieberegister 62 erhält an seinem Informationseingang das Fehlersignal F und bedient mit seinem Ausgang 114 über ein Markierschieberegister 70 (wie in Figur 3) die Markiereinrichtung 44, die Markierungen 106 herstellt. Das Schieberegister 67, das gegenüber Schieberegister 62 eine Anzahl zusätzlicher Speicherplätze 118 aufweist, dient zur Erzeugung der Zusatzmarkierungen 108 über Ausgang 116, Markierschieberegister 72 und durch Markiereinrichtung 46. Die Takteingänge der Schieberegister 62, 67 sind mit dem Vorschubtaktsignal V verbunden. Der die zusätzlichen Speicherplätze 118 des Schieberegisters 67 bedienende Informationseingang des letzteren ist mit Adressenausgängen eines Rechners 120 verbunden, der die folgenden Informationen erhält : Referenzsignal R, Winkeltaktsignal W und Durchmesserinformation D. Das Fehlersignal F ist zusätzlich noch an den Übernahmeeingang 122 des Schieberegisters 67 geführt.

Zum Verständnis der Arbeitsweise der in den Figuren 6 und 7 dargestellten Anordnung sollen die folgenden Erläuterungen dienen. Gehen wir der Einfachheit halber davon aus, daß die Strecken g und h gleich sind, so ergibt sich

$$h = d \cdot \pi \cdot \frac{k}{l} \qquad (3)$$

wobei k die Anzahl der Winkelsignaltakte zwischen dem Überlaufen von Referenzlinie 34 und Fehlerort 60, 1 die Anzahl der Winkelsignaltakte pro Umlauf des Rotierkopfes 17 und d der Durchmesser des Rohres 10 ist. Damit die Markierung 108 im Abstand g hinter der Markierung 106 erzeugt wird, muß um g' Speicherplätze hinter dem vom Fehlersignal F im Schieberegister 62 gesetzten Speicherplatz 124 der Speicherplatz 126 im Schieberegister 67 gesetzt werden.

$$g' = \frac{h}{e} \cdot \qquad (4)$$

Dabei ist e die Vorschubtaktkonstante, die angibt, welche Strecke das Rohr 10 pro Vorschubtakt zurücklegt. Aus (3) und (4) ergibt sich

$$g' = k \cdot d \cdot \frac{\pi}{l \cdot e} \qquad (5)$$

wobei $\pi/(l \cdot e)$ eine Gerätekonstante ist. Aufgabe des Rechners 120 ist es, aus den Informationen Durchmesser D, Referenzsignal R und Winkeltaktsignal W fortlaufend die Information g' zu berechnen und als Adresse bereit zu halten. Beim Vorliegen eines Fehlersignales am Eingang 122 wird diese Information durch Paralleleingabe in das Schieberegister 67 übernommen und dort zur Ausführung der Markierung 108 im Vorschubtakt weitergeschoben. Das Schieberegister 67 muß akkumulativ arbeiten.

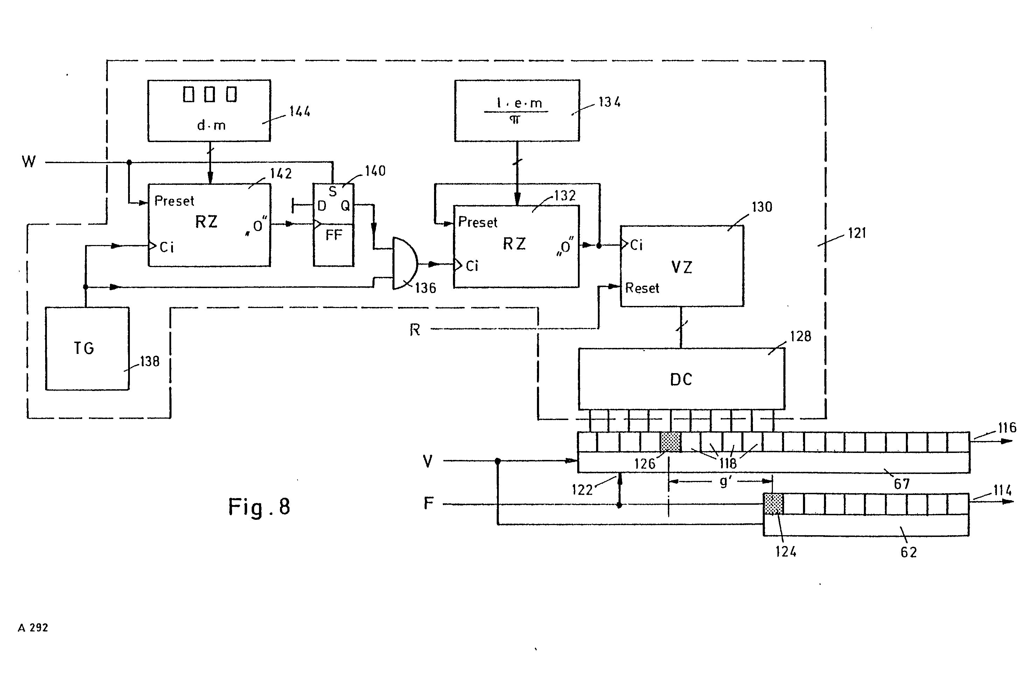

An die Stelle des Rechners 120 von Figur 7 kann eine einfache Zählerschaltung 121 treten, die in Figur 8 dargestellt ist. In diesem Falle ist an den Informationseingang der überzähligen Speicherplätze 118 des Schieberegisters 67 der Ausgang eines Decoders 128 geschaltet, der zu einem Zähler 130 gehört. Zähler 130 erhält Zählimpulse aus einem Frequenzteiler 132, zum Rücksetzen dient ihm das Referenzsignal R. Der als Frequenzteiler 132 arbeitende Rückwärtszähler besitzt ein Einstellglied 134 zum Eingeben der Gerätekonstanten. An seinem Zähleingang liegt der Ausgang eines Und-Gatters 136, dessen Eingänge mit dem Ausgang eines freilaufenden Taktgenerators 138 bzw. dem Ausgang Q einer Flip-Flop-Stufe 140 verbunden sind. Der Setzeingang der letzteren ist an das Winkeltaktsignal W, sein dynamischer Eingang ist an den Ausgang eines Rückwärtszählers 142 angeschlossen. Der letztere besitzt ein Einstellglied 144 zum Eingeben des Durchmessers d von Rohr 10. An den Vorsetzeingang des Zählers 142 ist das Winkeltaktsignal W, an seinen Zähleingang der Taktgenerator 138 geschaltet.

Zum Verständnis der Arbeitsweise der Schaltung von Figur 8 soll zunächst noch einmal Gleichung (5) betrachtet werden, und zwar in der folgenden abgewandelten Form :

$$g' = \frac{k \cdot d}{\frac{l \cdot e}{\pi}} \cdot \qquad (6)$$

Um mit dem Durchmesser d, der eine Längendimension aufweist, als Zählgröße arbeiten zu können, bedarf es noch der Einführung eines Maßstabfaktors m, der z. B. 1 Takt pro mm betragen kann. Damit ergibt sich

$$g' = \frac{k \cdot d \cdot m}{\frac{l \cdot e \cdot m}{\pi}} \qquad (7)$$

mit der neuen Gerätekonstante $(l \cdot e \cdot m)/\pi$. Die Größe g' läßt sich nach Figur 8 in zwei Schritten ermitteln, indem zunächst durch Und-Glied 136 das Produkt aus der in Einstellglied 144 eingegebenen Information $d \cdot m$ und der dem Winkeltaktsignal W entnommenen Größe k hergestellt wird und anschließend das Produkt im Frequenzteiler 130 durch die Größe $(l \cdot e \cdot m)/\pi$ geteilt wird. Das geschieht folgendermaßen. Das Winkeltaktsignal W setzt den Rückwärtszähler 142 vor auf den im Einsteller 144 gewählten Wert $d \cdot m$ und setzt gleichzeitig die Flip-Flop-Stufe 140. Der Taktgenerator 138, dessen Frequenz groß sein muß gegenüber der des Winkeltaktsignals W zählt den Zählbetrag herunter auf Null und setzt damit die Flip-Flop-Stufe 140 zurück. Die Länge des Impulses, der vom Ausgang Q der Flip-Flop-Stufe 140 an den ersten Eingang des Und-Gatters 136 gelangt, entspricht somit der für das Herunterzählen benötigten Zeit. Da die Zählimpulse des Taktgenerators 138 am anderen Eingang des Und-Gatters 136 liegen, stellt sich an dessen Ausgang eine Folge von Impulsen ein, deren Anzahl dem eingestellten Wert $d \cdot m$ entspricht. Der mit dem Einsteller 134 eingegebene Wert $(l \cdot e \cdot m)/\pi$ wird am Rückwärtszähler 132 nach jedem Herunterzählen auf Null wieder voreingestellt. Damit wird die Impulsfolge am Zähleingang des Zählers 132 durch die Zahl $(l \cdot e \cdot m)/\pi$ geteilt. Am Zähleingang des Vorwärtszählers 130 steht demnach die der Gleichung 7 entsprechende Zahl von g' Impulsen. Beginnend mit dem Rücksetzimpuls des Referenzsignals werden die Impulse am Zählereingang aufaddiert. Am Ausgang des Decoders 128 ergibt sich so die aktuelle Zahl g', d. h. der Platz mit der Ordnungszahl g' ist gesetzt. Diese Information wird, sobald ein Fehlersignal F am Übernahmeeingang 122 erscheint, von Schieberegister 67 übernommen und im Vorschubtakt weitergeschoben. Nach Durchlaufen der Schieberegister 67 und 72 erfolgt die Ausgabe der Markierung 108 genau im Abstand h = g von der Markierung 106. Es ist in ähnlicher Weise leicht möglich, was insbesondere bei größeren Rohrdurchmessern erwünscht sein kann, h als einen Bruchteil von g auszugeben.

Die oben beschriebenen Anwendungsbeispiele bezogen sich ausnahmslos auf die Abtastung zylindrischer Prüfteile durch einen umlaufenden Rotierkopf. Bei der Abtastung von ebenen Oberflächen können weitgehend die gleichen Schaltmittel benutzt werden. An die Stelle einer Umlaufperiode tritt die Periode der transversalen Bewegung. Bei der direkten Codierung tritt an die Stelle des Winkeltaktsignals ein Taktsignal, das die Periode der transversalen Bewegung weiter unterteil. Die Notwendigkeit zur Eingabe eines Prüfteildurchmessers entfällt.

Statt wie bisher vorgeschlagen nur eine zusätzliche Markiereinrichtung zur codierten Kennzeichnung der Ablage des transversalen Fehlerortes von der Referenzlinie zu benutzen, können auch zwei derartige Markiereinrichtungen eingesetzt werden. Die Referenzlinie liegt dann in der Mitte des abgetasteten Gebietes und die Ablage des Fehlerortes von ihr wird dann in den beiden möglichen Richtungen angegeben.

## Patentansprüche

1. Verfahren zum Markieren der Orte von Fehlern auf einem langgestreckten Prüfteil, bei dem

— das Prüfteil (10) in Längsrichtung relativ zu einer Prüfzone bewegt wird, in der die Oberfläche des Prüfteils quer zu seiner Längsrichtung zyklisch wiederholt auf Fehler abgetastet wird,

— aus den bei der Abtastung jeweils erhaltenen Fehlersignalen (F) sowie aus dem jeweils abgetasteten Oberflächenbereich und dem Abtastzyklus zugeordneten Bezugssignalen (V, R) ein Markierungsbefehl gebildet wird, der eine die Lage eines Fehlers in Längs- und Querrichtung anzeigende Markierung des Prüfteils bewirkt, dadurch gekennzeichnet, daß

zur Bildung des Markierungsbefehls ein erstes und ein zweites Markiersignal zu Zeitpunkten erzeugt werden, die voneinander eine der seitlichen Ablage (a ; g) des jeweiligen Fehlers (60) von einer in Längsrichtung des Prüfteils verlaufenden Referenzlinie (34) entsprechenden Abstand haben und von denen einer für die Lage des Fehlers in Längsrichtung des Prüfteils repräsentativ ist, und

die Markierung des Fehlers durch zwei getrennte, jeweils auf Veranlassung eines der Markiersignale angebrachte Markierzeichen (56, 58 ; 106, 108) derart gebildet wird, daß eines der Markierzeichen die Lage des Fehlers in Längsrichtung des Prüfteils und der Abstand (b ; h) der Markierzeichen voneinander in Längsrichtung die seitliche Ablage (a ; g) des Fehlers von der genannten Referenzlinie angibt.

2. Verfahren nach Anspruch 1, dadurch gekennzeichnet, daß die getrennten Markierzeichen (56, 58 ; 106, 108) jeweils auf parallel zur Längsachse des Prüfteils (10) verlaufenden Linien an der Oberfläche des Prüfteils (10), die unmittelbar benachbart sind, angebracht werden.

3. Verfahren nach Anspruch 2, dadurch gekennzeichnet, daß die genannten Linien unmittelbar benachbart zur Referenzlinie (34) liegen oder mit ihr zusammenfallen.

4. Verfahren nach Anspruch 1, dadurch gekennzeichnet, daß für die getrennten Markierzeichen (56, 58 ; 106, 108) jeweils unterschiedliche Markiermittel, z. B. unterschiedliche Farben benutzt werden.

5. Verfahren nach Anspruch 1, dadurch gekennzeichnet, daß eines der genannten Markierzeichen (58) sich periodisch mit jedem Abtastzyklus wiederholt.

6. Verfahren nach Anspruch 5, dadurch gekennzeichnet, daß für zylindrische Prüfteile der Ablagewinkel (α) zwischen der Referenzlinie (34) und dem Fehlerort proportional ist zum Verhältnis des Abstandes (b) zwischen einem ersten Markierzeichen (56) und einem ihm vorausgehenden zweiten Markierzeichen (58) zum Abstand (c) zwischen zwei zweiten Markierzeichen (58).

7. Anordnung zum Durchführen des Verfahrens nach Anspruch 1, mit

— einem eine oder mehrere Prüfsonden (24) aufweisenden Prüfkopf (16) zur zyklisch wiederholten Abtastung einer Prüfzone,

— Einrichtungen (12) zur Erzeugung einer in Längsrichtung des Prüfteils und quer zur Abtastrichtung des Prüfzone gerichteten Relativbewegung (14) zwischen Prüfteil und Prüfkopf,

— einer Markiereinrichtung mit mehreren Markierköpfen (44, 46) zum Anbringen von die Lage von Fehlern in Längs- und Querrichtung festlegenden Markierzeichen (56, 58 ; 106, 108) auf dem Prüfteil,

— einem ersten Geber (38, 40) für Taktsignale (V) in Abhängigkeit von der Relativbewegung zwischen Prüfteil und Prüfkopf,

— einem zweiten Geber (30, 32) zur Erzeugung eines Referenzsignals (R) jeweils während eines Abtastzyklus zum Zeitpunkt des Querens einer vorgegebenen, in Längsrichtung des Prüfteils verlaufenden Referenzlinie (34) durch die Abtastung,

— einer die Markiereinrichtung aktivierenden Steuerschaltung (62, 64, 70, 72 ; 62, 65, 86-102 ; 62, 67, 120 ; 62, 67, 121), welche eine vom Prüfkopf gelieferte Fehlersignale (F) aufnehmende Speichereinrichtung aufweist, die mehreren, den einzelnen Markierköpfen jeweils zugeordnete Registerspeicher (62, 64 ; 62, 65 ; 62) enthält, von denen ein erster (62) mit seinem Dateneingang (74) an den Prüfkopf und mit seinem Takteingang an den ersten Geber angeschlossen ist und dessen Ausgangssignal zur Aktivierung des zugeordneten Markierkopfes verwendet wird,

dadurch gekennzeichnet, daß

— die Markiereinrichtung zwei Markierköpfe (44, 46) und die Speichereinrichtung neben dem ersten (62) einen zweiten (64, 65, 67) Registerspeicher enthält, und

— der zweite (64 ; 65 ; 67) der beiden Registerspeicher mit seinem Takteingang ebenfalls an den ersten Geber (38, 40) angeschlossen und an seinem Dateneingang mit dem Referenzsignal (R) oder einem daraus abgeleiteten Signal (g') beaufschlagt ist, wobei das Ausgangssignal dem zugeordneten Markierkopf (46) zugeführt und zeitlich so gegen das Ausgangssignal des ersten Registerspeichers (62) versetzt ist, daß das von diesem Ausgangssignal bewirkte Markierzeichen (58 ; 108) von dem die Lage des Fehlers in Längsrichtung des Prüfteils definierenden Markierzeichen (56, 106) des dem ersten Registerspeicher (62) zugeordneten Markierkopfes (44) in Längsrichtung des Prüfteils einen Abstand (b ; h) hat, der der seitlichen Ablage (a, g) des Fehlers (60) von der Referenzlinie (34) entspricht.

8. Anordnung nach Anspruch 7, dadurch gekennzeichnet, daß desweiteren Mittel (86, 88, 90, 92, 102) vorgesehen sind, die nur dann die Übernahme eines Referenzsignales in den zweiten Registerspeicher (65) zulassen oder nur dann nach erfolgter Übernahme eines Referenzsignales in den zweiten Registerspeicher (65) dieses Referenzsignal dort nicht löschen, wenn das Referenzsignal den Anfang oder das Ende eines Abtastzyklus bildet, in die ein Fehlersignal gefallen ist.

9. Anordnung nach Anspruch 8, dadurch gekennzeichnet, daß zu den genannten Mitteln

a) ein dritter Registerspeicher (88) gehört, an dessen Informationseingang das Referenzsignal (R), an dessen Takteingang die oben genannten Taktsignale (V) liegen und dessen Speicherzellen für eine parallele Informationsübermittlung mit dem Informationseingang (82) des zweiten Registerspeichers (65) verbunden sind, ferner

b) ein Speicher (90, 92) für die Information « Fehlersignal während eines Abtastzyklus », sowie

c) Verknüpfungsmittel (102) zum Verknüpfen der Information des letztgenannten Speichers mit dem Referenzsignal,

— der Ausgang der Verknüpfungsmittel (102) mit dem Rücksetzeingang (104) des dritten Registerspeichers (88) verbunden ist,

— ferner der Übernahmeeingang (84) des zweiten Registerspeichers (65) mit dem Referenzsignal (R) verbunden ist.

10. Anordnung nach Anspruch 7, dadurch gekennzeichnet, daß

— der zweite Registerspeicher (67) eine über die Anzahl m der Speicherplätze des ersten Registerspeichers (62) hinausgehende Anzahl von zusätzlichen Speicherplätzen (118) aufweist, die vor den übrigen Speicherplätzen angeordnet sind,

— an diese zusätzlichen Speicherplätze (118) eine Markierversatzschaltung (120 ; 121) z. B. in Form eines Rechners angeschlossen ist, die die folgenden Informationen erhält :

a) Referenzsignal beim Überschreiten der Referenzlinie (34),

b) dem Abtastweg des Prüfkopfes innerhalb des Abtastzyklus entsprechende transversale Taktsignale, und die ferner aus den Informationen a) und b) jederzeit eine der Anzahl der seit Überschreiten der Referenzlinie aufgetretenen transversalen Taktsignale proportionale Anzahl g' feststellt und die im Augenblick des Auftretens eines Fehlersignales einen um die Anzahl g' vor dem m-ten Speicherplatz liegenden Speicherplatz (126) des zweiten Registerspeichers setzt.

11. Anordnung nach Anspruch 10, dadurch gekennzeichnet, daß

— beim Einsatz umlaufender Prüfköpfe zur Abtastung zylindrischer Prüfteile zusätzlich die Information « Durchmesser d des Prüfteiles » in die Markierversatzschaltung (120 ; 121) eingegeben wird und

— die Anzahl g' auch dem Durchmesser d proportional ist.

12. Anordnung nach Anspruch 10, dadurch gekennzeichnet, daß

— die Markierversatzschaltung (121) einen Zähler (130) und einen Decoder (128) besitzt

— der Zählereingang des Zählers (130) mit einer Impulsfolge aus g' Impulsen während jedes Abtastzyklus beaufschlagt ist, wohingegen an seinem Rücksetzeingang das Referenzsignal (R) liegt und der Ausgang des Zählers (130) mit dem Decoder (128) verbunden ist,

— die Ausgänge des Decoders (128) mit den Eingängen der zusätzlichen Speicherplätze (118) des zweiten Registerspeichers (67) verbunden sind, derart daß bei Auftreten eines Fehlersignales die Information des Decoders (128) auf die zusätzlichen Speicherplätze (118) des zweiten Registerspeichers (67) übertragen wird.

13. Anordnung nach den Ansprüchen 11 und 12, dadurch gekennzeichnet, daß in der Markierversatzschaltung (121) weiterhin enthalten sind :

a) ein Rückwärtszähler (142) mit einem Einstellglied (144) zum Einstellen einer dem Durchmesser d entsprechenden Zahl,

b) ein Taktgeber (138), der den jeweils vom transversalen Taktsignal auf die dem Durchmesser entsprechende Zahl vorgesetzten Rückwärtszähler (142) auf 0 herunterzählt, ferner

c) Mittel (140, 136) zum Ausgeben der Taktimpulse des Taktgebers (138), die in die zum Herunterzählen benötigte Zeitspanne fallen, und

e) ein Frequenzteiler (132, 134), der die Anzahl der genannten Taktimpulse durch eine Gerätekonstante dividiert, und daß

— die Ausgangsimpulse des Frequenzteilers (132) als die genannte Impulsfolge am Eingang des Zählers (130) liegen.

14. Anordnung nach einem der Ansprüche 7-13, dadurch gekennzeichnet, daß die Markiereinrichtung einen weiteren dritten Markierkopf enthält, wobei der erste die Lage des Fehlerortes in der Längsrichtung des Prüfteiles angibt, während der zweite und dritte die Ablage des Fehlerortes links oder rechts von der Referenzlinie in Längsrichtung des Prüfteiles codiert angeben.

## Claims

1. A method for marking the locations of flaws on an elongate testpiece wherein :

— the testpiece (10) is moved in the longitudinal direction relative to a test region in which the surface of the testpiece is cyclically repeatedly scanned for flaws, transversely to the longitudinal direction of the testpiece,

— a marking command is formed from the flaw signals (F) which are respectively obtained in the scanning operation, and from reference signals (V, R) associated with the respectively scanned surface region and the scanning cycle, said marking command causing marking of the testpiece, to indicate the location of a flaw in the longitudinal and the transverse directions, characterised in that

to form the marking command, first and second marking signals are generated at times which are at a spacing from each other corresponding to the lateral displacement (a ; g) of the respective flaw (60) from a reference line (34) extending in the longitudinal direction of the testpiece, and one of which is representative of the location of the flaw in the longitudinal direction of the testpiece, and

the marking of the flaw is formed by two separate marker marks (56, 58 ; 106, 108) which are respectively applied in response to one of the marker signals, in such a way that one of the marker marks denotes the location of the flaw in the longitudinal direction of the testpiece and the spacing (b ; h) of the marker marks from each other in the longitudinal direction denotes the lateral displacement (a ; g) of the flaw from said reference line.

2. A method according to claim 1, characterised in that the separate marker marks (56, 58 ; 106, 108) are respectively applied on lines at the surface of the testpiece (10), which extend parallel to the longitudinal axis of the testpiece (10) and which are directly adjacent.

3. A method according to claim 2, characterised in that said lines are disposed directly adjacent the reference line (34) or coincide therewith.

4. A method according to claim 1, characterised in that respectively different marker means, for example different colours, are used for the separate marker marks (56, 58 ; 107, 108).

5. A method according to claim 1, characterised in that one of said marker marks (58) is periodically repeated with each scanning cycle.

6. A method according to claim 5, characterised in that, for cylindrical testpieces, the displacement angle ($\alpha$) between the reference line (34) and the location of the flaw is proportional to the relationship of the spacing (b) between a first marker mark (56) and a second marker mark (58) preceding same, and the spacing (c) between two second marker marks (58).

7. An arrangement for carrying out the method according to claim 1 comprising :

— a test head (16) having one or more test probes (24), for cyclically repeatedly scanning a test region,

— means (12) for producing a relative movement (14) as between the testpiece and the test head, in the longitudinal direction of the testpiece and transversely with respect to the direction of scanning of the test region,

— a marker means having a plurality of marker heads (44, 46) for applying marker marks (56, 58 ; 106, 108) to the testpiece, to fix the location of flaws in the longitudinal and transverse directions,

— a first generator (38, 40) for clock signals (V) in dependence on the relative movement as between the testpiece and the test head,

— a second generator (30, 32) for generating a reference signal (R) during a respective scanning cycle at the time of crossing by the scanning means of a predetermined reference line (34) which extends in the longitudinal direction of the testpiece,

— a control circuit (62, 64, 70, 72 ; 62, 65, 86-102 ; 62, 67, 120 ; 62, 67, 121) for activating the marker means and having a memory means for receiving flaw signals (F) supplied by the test head, said memory means including a plurality of register memories (62, 64 ; 62, 65 ; 62) which are respectively associated with the individual marker heads and of which a first memory (62) is connected with its data input (74) to the test head and with its clock input to the first generator and whose output signal is used for activating the associated marker head,

characterised in that

— the marker means includes two marker heads (44, 46) and the memory means, besides the first register memory (62), includes a second register memory (64, 65, 67), and

— the second one (64 ; 65 ; 67) of the two register memories is also connected with its clock input to the first generator (38, 40) and at its data input receives the reference signal (R) or a signal (g') derived therefrom, wherein the output signal is fed to the associated marker head (46) and is time-shifted relative to the output signal of the first register memory (62) in such a way that the marker mark (58 ; 108) produced by that output signal is at a spacing (b ; h), in the longitudinal direction of the testpiece, from the marker mark (56 ; 106), which defines the location of the flaw in the longitudinal direction of the testpiece, of the marker head (44) associated with the first register memory (62), said spacing (b ; h) corresponding to the lateral displacement (a, g) of the flaw (60) from the reference line (34).

8. An arrangement according to claim 7, characterised in that there are additionally provided means (86, 88, 90, 92, 102) which permit transfer of a reference signal into the second register memory (65) or, after transfer of a reference signal into the second register memory (65), do not erase said reference signal therein, only when the reference signal forms the beginning or the end of a scanning cycle, in which a flaw signal has occurred.

9. An arrangement according to claim 8, characterised in that said means include :

a) a third register memory (88) having an information input at which the reference signal (5) occurs and a clock input at which said clock signals (V) occur and having memory cells which are connected to the information input (82) of the second register memory (65) for parallel information communication,

b) a memory (90, 92) for the information " flaw signal during a scanning cycle ", and

c) connecting means (102) for connecting the information of the last-mentioned memory to the reference signal,

— that the output of the connecting means (102) is connected to the reset input (104) of the third register memory (88), and

— the transfer input (84) of the second register memory (65) is connected to the reference signal (R).

10. An arrangement according to claim 7, characterised in that

— the second register memory (67) has a number of additional memory locations (118), said number going beyond the number (m) of memory locations of the first register memory (62), said additional memory locations (118) being arranged in front of the other memory locations,

— connected to said additional memory locations (118) is a marker displacement circuit (120 ; 121) for example in the form of a computer, which receives the following items of information :

a) reference signal, when the reference line (34) is crossed over, and

b) transversal clock signals which correspond to the scanning travel of the test head within the scanning cycle, and

which, from the items of information a) and b), establishes at any time a number g' which is proportional to the number of transversal clock signals which have occurred since the reference line was crossed over, and which, at the moment of the occurrence of a flaw signal, sets a memory location (126) of the second register memory, which is in front of the m-th memory location by the number g'.

11. An arrangement according to claim 10, characterised in that

— when using rotary test heads for scanning cylindrical testpieces, the information " diameter d of the testpiece " is additionally inputted into the marker displacement circuit (120 ; 121), and

— the number g' is also proportional to the diameter d.

12. An arrangement according to claim 10, characterised in that

— the marker displacement circuit (121) has a counter (130) and a decoder (128),

— the counter input of the counter (130) receives a pulse train comprising g' pulses during each scanning cycle whereas the reference signal (R) is applied to its reset input and the output of the counter (130) is connected to the decoder (128),

— the outputs of the decoder (128) are connected to the inputs of the additional memory locations (118) of the second register memory (67), in such a way that when a flaw signal occurs, the information of the decoder (128) is transferred to the additional memory locations (118) of the second register memory (67).

13. An arrangement according to claims 11 and 12, characterised in that the marker displacement circuit (121) further includes :

a) a down counter (142) having a setting member (144) for setting a number corresponding to the diameter d,

b) a clock generator (138) which counts down to 0 the down counter (142) which is respectively preset to the number corresponding to the diameter by the transversal clock signal,

c) means (140, 136) for outputting the clock pulses of the clock generator (138), which occur in the period of time required for the down-counting operation, and

e) a frequency divider (132, 134) which divides the number of said clock pulses by an apparatus constant, and that

— the output pulses of the frequency divider (132) are applied as said pulse train to the input of the counter (130).

14. An arrangement according to one of claims 7 to 13, characterised in that the marker means includes a further third marker head, wherein the first specifies the location of the flaw in the longitudinal direction of the testpiece while the second and third specify in coded form the displacement of the location of the flaw to the left or to the right of the reference line in the longitudinal direction of the testpiece.

**Revendications**

1. Procédé de localisation de défauts dans une pièce d'essai de forme allongée, dans lequel

— la pièce (10) soumise aux essais se déplace dans le sens longitudinal par rapport à une zone d'essais dans laquelle la surface de la pièce d'essai est soumise, à plusieurs reprises, d'une manière cyclique, dans le sens de la longueur à une exploration pour la recherche de défauts,

— dans lequel les signaux d'erreur (F) obtenus à chaque exploration et les signaux de référence (V, R) correspondant à chacune des zones superficielles explorées et au cycle d'exploration déclenchent l'émission d'un ordre de marquage qui provoque un marquage de la pièce d'essai indiquant la position du défaut dans le sens longitudinal et dans le sens transversal, caractérisé en ce que

l'ordre de marquage s'obtient à partir d'un premier et d'un deuxième signal de marquage produits à des instants qui sont séparés par un intervalle correspondant au décalage latéral (a, g) de chaque défaut (60) par rapport à une ligne de référence (34) orientée dans le sens de la longueur de la pièce d'essai et dont l'un est représentatif de la position du défaut dans le sens de la longueur de la pièce d'essai et

en ce que le marquage du défaut par deux marques (56, 58, 106, 108) séparées produites par des signaux de marquage s'effectue dans des conditions telles que l'une des marques indique la position du défaut dans le sens de la longueur de la pièce d'essai et que la distance (b, h) qui sépare les marques dans le sens longitudinal indique le décalage latéral (a, g) du défaut par rapport à la ligne de référence déjà indiquée.

2. Procédé selon la revendication 1, caractérisé en ce que les marques (56, 58, 106, 108) séparées sont faites sur des lignes disposées sur la surface de la pièce d'essai (10) qui sont parallèles à l'axe longitudinal de la pièce d'essai (10) et sont à proximité immédiate l'une de l'autre.

3. Procédé selon la revendication 2, caractérisé en ce que les lignes en question sont à proximité immédiate de la ligne de référence (34) ou coïncident avec elle.

4. Procédé selon la revendication 1, caractérisé en ce que, pour les marques séparées (56, 58, 106, 108), on utilise chaque fois des moyens de marquage différents, par exemple, des couleurs différentes.

5. Procédé selon la revendication 1, caractérisé en ce que l'une des marques mentionnées (58) se répète périodiquement à chaque cycle d'exploration.

6. Procédé selon la revendication 5, caractérisé en ce que pour les pièces d'essai cylindriques, l'angle de décalage (α) entre la ligne de référence (34) et l'emplacement du défaut est proportionnel au rapport entre la distance (b) séparant une première marque (56) d'une deuxième marque (58) qui la précède et la distance (c) qui sépare deux deuxièmes marques (58).

7. Appareil pour l'application du procédé selon la revendication 1, qui comprend

— une tête d'essai (16) comportant une ou plusieurs sondes (24) pour l'exploration cycliquement répétée d'une zone d'essai,

— des dispositifs (12) produisant, dans le sens de la longueur de la pièce d'essai et transversalement par rapport à la direction d'exploration de la zone d'essai, un mouvement relatif (14) entre la pièce d'essai et la tête d'essai,

— un dispositif de marquage comportant plusieurs têtes de marquage (44, 46) pour la réalisation sur la pièce d'essai, de marques (56, 58, 106, 108) fixant la position du défaut dans le sens longitudinal et le sens transversal,

— un premier organe (38, 40) émettant des signaux d'horloge (V) en fonction du déplacement relatif de la pièce d'essai et de la tête d'essai,

— un deuxième organe (30, 32) émettant un signal de référence (R) à chaque cycle de travail au moment du franchissement d'une ligne de référence (34) donnée, orientée dans le sens de la longueur de la pièce d'essai, par le dispositif d'exploration,

— un circuit de commande (62, 64, 70, 72 ; 62, 65, 86 ; 102 ; 62, 67, 120 ; 62, 67, 121) actionnant le dispositif de marquage, qui comprend une installation de mémoire qui enregistre les signaux de défaut (F) fournis par la tête d'essai et contient plusieurs mémoires à registres (62, 64 ; 62, 65 ; 62) qui correspondent à chacune des têtes de marquage et dont l'une (62) est reliée, par son entrée de données (74), à la tête d'essai et, par son entrée de battements, au premier organe émetteur de signaux d'horloge et dont le signal de sortie est utilisé pour la mise en action de la tête de marquage correspondante,
caractérisé en ce que

— le dispositif de marquage contient deux têtes de marquage (44, 46) et que l'installation de mémoire contient, en plus de la première mémoire à registre (62), une deuxième mémoire à registre (64, 65, 67), et en ce que

— la deuxième (64, 65, 67) des deux mémoires à registre est reliée également par son entrée à battements au premier organe émetteur (38, 40) de signaux d'horloge et reçoit, à son entrée de données, le signal de référence (R) ou un signal (g') qui en dérive, le signal de sortie étant envoyé à la tête de marquage (46) correspondante et étant décalé dans le temps par rapport au signal de sortie de la première mémoire à registre (62), en ce que la marque (58, 108) produite par ce signal de sortie se trouve, par rapport à la marque (56, 106) de la tête de marquage (44) correspondant à la première mémoire à registre (62) qui définit la position du défaut dans le sens longitudinal, à une distance (b, h) dans le sens longitudinal de la pièce d'essai, qui correspond au décalage latéral (a, g) du défaut (60) par rapport à la ligne de référence (34).

8. Appareil selon la revendication 7, caractérisé en ce qu'il comporte en outre des moyens (86, 32, 90, 92, 102) qui ne permettent la réception d'un signal de référence dans la deuxième mémoire à registre (65) ou seulement, lorsqu'un signal de référence a été reçu dans la deuxième mémoire à registre (65), n'effaçant pas ce signal de référence lorsque le signal de référence constitue le début ou la fin d'un cycle d'exploration dans lequel un signal de défaut est inscrit.

9. Appareil selon la revendication 8, caractérisé en ce que les moyens indiqués comprennent :

a) une troisième mémoire à registre (88) à l'entrée d'information de laquelle arrive le signal de référence (R), à l'entrée de battements de laquelle s'appliquent les signaux d'horloge (V) indiqués et dont les cellules de mémoire sont reliées, pour une transmission parallèle de l'information, à l'entrée d'informations (82) de la deuxième mémoire à registre (65), de plus

b) une mémoire (90, 92) pour l'information « signal de défaut pendant un cycle d'exploration », ainsi que

c) des moyens de liaison (102) assurant la liaison entre l'information de cette dernière mémoire avec le signal de référence, en ce que

— la sortie des moyens de liaison (102) est reliée à l'entrée de remise (104) de la troisième mémoire à registre (88),

— en outre, en ce que l'entrée de réception (84) de la deuxième mémoire à registre (65) est reliée au signal de référence (R).

10. Appareil selon la revendication 7, caractérisé en ce que

— la deuxième mémoire à registre (67) comporte des emplacements de mémoire supplémentaires (118) dont le nombre dépasse le nombre m des emplacements de mémoire de la première mémoire à registre (62) et qui sont placés devant les autres emplacements de mémoire, en ce que

— ces emplacements de mémoire supplémentaires (118) sont reliés à un circuit de placement des marques (120, 121) constitué par exemple par un calculateur, qui reçoit les informations suivantes :

a) signal de référence lors du franchissement de la ligne de référence (34),

b) signaux d'horloge correspondant au trajet d'exploration de la tête d'essai à l'intérieur du cycle d'exploration et qui, en plus, à partir des informations a) et b), détermine un nombre g' proportionnel au nombre des signaux d'horloge transversaux qui se sont produits depuis le franchissement de la ligne de référence et qui, lors de l'apparition d'un signal de défaut, avance du nombre (g') un emplacement de mémoire (126) de la deuxième mémoire à registre situé en avant du m$^{ième}$ emplacement de mémoire.

11. Appareil selon la revendication 10, caractérisé en ce que

— lorsqu'on utilise des têtes d'essai tournantes pour l'exploration de pièces cylindriques le circuit de placement des marques (120, 121) reçoit, en plus, l'information « diamètre d de la pièce d'essai » et en ce que

— le nombre (g') est également proportionnel au diamètre d.

12. Appareil selon la revendication 10, caracté

risé en ce que
— le circuit de placement des marques (121) comporte un compteur (130) et un décodeur (128), en ce que
— l'entrée de compteur (130) reçoit, pendant chaque cycle d'exploration, une suite d'impulsions de (g') impulsions tandis que le signal de référence (R) est appliqué à son entrée de remise et que la sortie du compteur (130) est reliée au décodeur (128), en ce que
— les sorties du décodeur (128) sont reliées aux entrées des emplacements de mémoire supplémentaires (118) de la deuxième mémoire à registre (67), de telle manière qu'en cas d'apparition d'un signal de défaut, l'information du décodeur (128) est transmise aux emplacements de mémoire (118) de la deuxième mémoire à registre (67).

13. Appareil selon l'une des revendications 11 et 12, caractérisé en ce que le circuit de placement des marques (121) comprend également :

a) un compteur d'espacement arrière (142) comportant un organe de réglage (144) pour le réglage d'un nombre correspondant au diamètre d,

b) un rythmeur (138) qui ramène à zéro le compteur d'espacement arrière (142) décalé en avant, par le signal d'horloge transversal, jusqu'au nombre correspondant au diamètre,

c) des moyens (140, 136) pour l'émission des impulsions d'horloge du rythmeur (138) qui tombent dans la période nécessaire au décompte en diminution, et

e) un diviseur de fréquence (132, 134) qui divise le nombre des impulsions d'horloge par une constante caractéristique du dispositif et en ce que

— les impulsions de sortie du diviseur de fréquence (132) s'appliquent, comme suite d'impulsions, à l'entrée du compteur (130).

14. Appareil selon l'une des revendications 7 à 13, caractérisé en ce que l'installation de marquage comprend une troisième tête de marquage, la première tête indiquant la position du défaut dans le sens de la longueur de la pièce d'essai tandis que la deuxième et la troisième donnent en code le décalage de l'emplacement du défaut à gauche ou à droite de la ligne de référence dans le sens de la longueur de la pièce d'essai.

Fig. 1

Fig. 3

Fig. 4a

4b

4c

Fig. 2

A 29 2

1

**0 060 378**

Fig. 5

Fig. 6

Fig. 7

A 292

2

Fig. 8

121 · 130 · 134 · 132 · 128 · VZ · Ci · Reset · DC · RZ · „O" · Preset · Ci · $\frac{1 \cdot e \cdot m}{\pi}$ · 136 · 140 · S · D · Q · FF · 144 · 142 · d·m · RZ · „O" · Preset · Ci · R · 138 · TG · W · V · F · 116 · 114 · 67 · 62 · 124 · 118 · g' · 126 · 122

3

A 292